# EUROPÄISCHE PATENTSCHRIFT

(11) **EP 1 031 593 B1**
(45) Veröffentlichungstag und Bekanntmachung des Hinweises auf die Patenterteilung: **29.10.2003**
(21) Anmeldenummer: 00101126.1
(22) Anmeldetag: 21.01.2000
(51) Int. Cl.: C08G 77/54, C09D 183/14

(54) **Wasserbasierende Zusammensetzung aminofunktioneller Siliciumverbindungen**
Aqueous aminofunctional silicon compounds containing composition
Composition aqueuse contenant des composés aminofonctionels

(30) Priorität: 27.02.1999 DE 19908636
(43) Veröffentlichungstag der Anmeldung: 30.08.2000
(73) Patentinhaber: Degussa AG, 40474 Düsseldorf (DE)
(72) Erfinder: Standke, Burkhard, Dr., 79540 Lörrach (DE); Edelmann, Roland, 79664 Wehr (DE); Frings, Albert-Johannes, Dr., 79618 Rheinfelden (DE); Horn, Michael, Dr., 79618 Rheinfelden (DE); Jenkner, Peter, Dr., 79618 Rheinfelden (DE); Laven, Ralf, Dr., 79739 Schwörstadt (DE); Mack, Helmut, Dr., 79618 Rheinfelden (DE); Monkiewicz, Jaroslaw, Dr., 79618 Rheinfelden (DE); Switalla, Günter, 53819 Neunkirchen-Seescheid (DE)

(56) Entgegenhaltungen:
- EP-A- 0 716 128
- US-A- 5 206 285

## Beschreibung

Die vorliegende Erfindung betrifft eine Zusammensetzung, die aus einem Gemisch wasserlöslicher, aminofunktioneller und im wesentlichen alkoxygruppenfreier Siliciumverbindungen, Wasser, gegebenenfalls einem geringen Gehalt an Alkohol und gegebenenfalls einem Gehalt an Säure besteht. Darüber hinaus sind solche Zusammensetzungen frei von Lösemitteln, wobei Wasser und Alkohole aus der Menge der Lösemittel ausgenommen sind.

Aminosilane sind bekannt als wasserlösliche Haftvermittler. Auch sind wasserbasierende Zusammensetzungen mit multifunktionellen Organopolysiloxanen als Haftvermittler bekannt, vgl. EP 0 716 128 A2. Bei diesen Systemen wird die Ursache für die Verbesserung der Wasserlöslichkeit im wesentlichen den aminofunktionellen Gruppen zugeschrieben.

Eine Reihe weiterer Applikationsgebiete für aminofunktionelle Silane bzw. Siloxane sind:
Die Verwendung in Beschichtungssystemen, im Bereich Korrosionsschutz, für die biozide Ausrüstung von Oberflächen, bei der Holzbehandlung, bei der Herstellung elektrophotographischer Toner, als Bestandteil in Aminosiliconflüssigkeiten (US 5 077 421), als Bestandteil in Epoxidharzen [Chemical Abstracts (1991) - CA 114: 83579s], für die Herstellung organisch modifizierter Gläser (EP 0 223 987 A2), als Antikrebsmittel [Chemical Abstracts (1983) - CA 99: 133650c], zur Modifizierung von Glas- und Glasfaseroberflächen, bei der Abwasserbehandlung, für die Pigmentbehandlung, als Bestandteil in Katalysatoren sowie zu deren Herstellung (US 4 053 534), als Flockungsmittel, um nur einige Beispiele zu nennen.

Darüber hinaus ist bekannt, aminofunktionelle, partiell hydrolysierte Alkoxysilanoligomere zur Minderung der Agglomeratbildung anorganischer Pulver einzusetzen. So ist aus der US 5 543 173 zu entnehmen, daß solche Zubereitungen auch erhebliche Mengen an Alkohol enthalten und darüber hinaus besagte Silanoligomere noch deutliche Mengen an Hydrolysealkohol freisetzen können.

Da Aminosilane, wie z. B. Aminopropyltriethoxysilan oder Aminopropyltrimethoxysilan, wasserlöslich sind, erlauben sie eine wasserbasierende Applikation, z. B. in wäßrigen Glasfaserschlichten. Nachteilig wirkt sich auch hier die bei der Hydrolyse auftretende Bildung von Alkoholen aus. Beispielsweise entwickelt das Aminopropyltriethoxysilan bei wäßriger Applikation zu rd. 62 % des eingesetzten Silangewichts Ethanol als Hydrolyseprodukt. Ethanol setzt als brennbare, wasserlösliche Flüssigkeit den Flammpunkt derartiger Applikationslösungen herunter, was im allgemeinen die Verwendung teurer, explosionsgeschützter Apparate erforderlich macht.

Ein weiterer Nachteil alkoholhaltiger Lösungen ist der Umstand, daß aus ökologischen und arbeitssicherheitstechnischen Gründen das Lösemittel Alkohol durch mitunter sehr aufwendige technische Maßnahmen entfernt werden muß.

Aminoalkoxysilane können bei Hydrolyse maximal eine Silantriolgruppe pro Molekül bilden. Silanole und weitere Silanolfunktionen können untereinander oder mit anderen OH-Funktionen vemetzen, beispielsweise mit OH-Funktionen von einem Substrat oder von gelösten, emulgierten oder suspendierten monomeren oder polymeren Stoffen. Derartige OH-Funktionen könnten z. B. sein: Silanolfunktionen auf Kieselsäure-, Glas-, Mineral-, Glasfaser- oder Mineralfaseroberflächen, OH-Funktionen auf Zellulose, Leder, Papier, Holz und dergleichen, aber auch OH-Funktionen auf Metalloberflächen oder Metalloxidoberflächen und auch OH-Funktionen an der Oberfläche von Kunststoffen oder Polymeren in Zubereitungen, beispielsweise Natur- oder Kunststoffemulsionen oder -dispersionen. Zum Erreichen einer höheren Vernetzungsdichte und möglicherweise damit einhergehender Verbesserung der Anwendungseigenschaften wären beispielsweise zwei Silantrioleinheiten pro Molekül wünschenswert. Zwei Silantrioleinheiten pro Molekül erhält man bei der Hydrolyse von Bis(trialkoxysilylalkyl)aminen. Wäßrige Lösungen derartiger Verbindungen sind jedoch nicht stabil. Sie neigen zum Gelieren und Ausflocken und sind somit nicht applikationsfähig.

Der Erfindung lag die Aufgabe zugrunde, ein wasserbasierendes Mittel bereitzustellen, welches Bis(trihydroxysilylalkyl)amine bzw. davon abgeleitete Siloxane enthält, einen möglichst geringen Gehalt an Alkohol aufweist, darüber hinaus lösemittelfrei ist und Siliciumverbindungen enthält, die im wesentlichen alkoxygruppenfrei sind.

Die gestellte Aufgabe wird erfindungsgemäß entsprechend den Angaben der Patentansprüche gelöst.

Es wurde überraschenderweise gefunden, daß eine niedrigviskose, in der Regel klare, weitgehend lagerstabile Zusammensetzung, die aus einem Gemisch wasserlöslicher, aminofunktioneller und im wesentlichen alkoxygruppenfreier Siliciumverbindungen, Wasser, gegebenenfalls einem geringen Gehalt an Alkohol und gegebenenfalls einem Gehalt an Säure besteht, erhältlich ist, indem man mindestens ein Aminosilan der allgemeinen Formel III

NH₂[(CH₂)₂NH]ₓ(CH₂)₃Si(OR)₃ (III),

worin x gleich 0, 1 oder 2 ist und R eine lineare oder verzweigte Alkyl-Gruppe mit 1 bis 4 C-Atomen darstellt,
und/oder dessen Ankondensationsprodukte
und mindestens ein Aminosilan der allgemeinen Formel IV

(RO)₃Si(CH₂)₃[NH(CH₂)₂]_{y}NH[(CH₂)₂NH]_{z}(CH₂)₃Si(OR)₃ (IV),

worin y und z gleich 0, 1 oder 2 und gleich oder verschieden sind und R eine lineare oder verzeigte Alkyl-Gruppe mit 1 bis 4 C-Atomen darstellt,
und/oder dessen Ankondensationsprodukte mischt, Wasser und gegebenenfalls Säure zugibt, hydrolysiert und den Hydrolysealkohol im wesentlichen entfernt. Unter Ankondensationsprodukten von Aminosilanen der allgemeinen Formeln III oder IV werden solche dimeren, trimeren, tetrameren oder höheren oligomeren Produkte verstanden, die in der Regel durch Kondensation und/oder Vorhydrolyse der jeweiligen Monomeren unter Abspaltung von Alkohol erhältlich sind.

Darüber hinaus wird die vorliegende Zusammensetzung üblicherweise in flüssiger, gut applizierbarer Form erhalten und ist in der Regel auch im wesentlichen frei von Lösemitteln. So kann bei Anwendung der erfindungsgemäßen Zusammensetzung aufgrund der hierin enthaltenen Siliciumverbindungen der allgemeinen Formeln I und II eine höhere Vernetzungsdichte in der polymeren ausgehärteten Siloxanstruktur und eine deutliche Verbesserung mechanischer, chemischer und thermischer Eigenschaften behandelter Stoffe, z.B. Verbundwerkstoffe, wie z. B. glasfaser- und mineralfaserverstärkte Kunststoffe, Farben und Lacke, gefüllte Polymere, erzielt werden.

Geeigneterweise kann die erfindungsgemäße Zusammensetzung auch in jedem Verhältnis mit Wasser verdünnt werden, wobei kein zusätzlicher Hydrolysealkohol entsteht. In der Regel ist die vorliegende Zusammensetzung in hervorragender Weise über mehr als 12 Monate lagerstabil.

Gegenstand der vorliegenden Erfindung ist somit eine Zusammensetzung, die aus einem Gemisch wasserlöslicher, aminofunktioneller und im wesentlichen alkoxygruppenfreier Siliciumverbindungen, Wasser, gegebenenfalls einem Gehalt an Alkohol und gegebenenfalls einem Gehalt an Säure besteht wobei die Zusammensetzung Siliciumverbindungen der allgemeinen Formel I

NH₂[(CH₂)₂NH]ₓ(CH₂)₃SiO_{1,5} (I),

worin x gleich 0, 1 oder 2 ist,
und der allgemeinen Formel II

(SiO_{1,5})(CH₂)₃[NH(CH₂)₂]_{y}NH[(CH₂)₂NH]_{z}(CH₂)₃SiO_{1,5} (II),

worin y und z gleich 0, 1 oder 2 und gleich oder verschieden sind, enthält.

Vorzugsweise weist die erfindungsgemäße Zusammensetzung einen Gehalt an Alkohol von weniger als 5 Gew.-%, besonders vorzugsweise von weniger als 1 Gew.-%, ganz besonders vorzugsweise von 1 Gew.-ppm bis 0,5 Gew.-%, auf. Insbesondere kann eine solche Zusammensetzung Methanol und/oder Ethanol als Alkohol enthalten.

Femer weist eine erfindungsgemäße Zusammensetzung einen Gehalt an Siliciumverbindungen von weniger als 60 Gew.-% auf, vorzugsweise weniger als 50 Gew.-%, besonders bevorzugt liegt der Gehalt an Siliciumverbindungen bei 0,01 bis 40 Gew.-%, und ganz besonders bevorzugt liegt er bei 0,5 bis 40 Gew.-%.

Geeigneterweise liegt dabei in einer erfindungsgemäßen Zusammensetzung das Gewichtsverhältnis der Siliciumverbindungen der allgemeinen Formel I und der allgemeinen Formel II bei I/II ≥ 1, wobei die allgemeinen Formeln I und II die nach allgemeinem Verständnis hierzu jeweils im Gleichgewicht befindlichen Silanole und Siloxane einschließen. Vorzugsweise liegt das Gewichtsverhältnis der Siliciumverbindungen der allgemeinen Formel I und der allgemeinen Formel II bei I : II = 1 bis 100 : 1, besonders vorzugsweise bei I : II = 1,5 bis 30 : 1 und ganz besonders vorzugsweise bei I : II = 1,5 bis 4,5 : 1.

Um die Stabilität einer erfindungsgemäßen Zusammensetzung noch zu verbessern, insbesondere die Stabilität verdünnter Lösungen oder Lösungen, welche einen hohen Anteil an Verbindungen der allgemeinen Formel II, sogenannte "Bis-Produkte", enthalten, kann man den pH-Wert durch Zugabe einer organischen oder anorganischen Brönstedt-Säure einstellen. Hierzu kann man beispielsweise Chlorwasserstoff, Salpetersäure, Schwefelsäure, Ameisensäure, Essigsäure sowie Propionsäure verwenden.

Der pH-Wert einer erfindungsgemäßen Zusammensetzung kann im Bereich zwischen 1 bis 14 liegen. Geeigneterweise liegt er bei einem Wert <11, bevorzugt im Bereich von 4 bis 9.

Gegenstand der vorliegenden Erfindung ist ferner das Verfahren zur Herstellung einer Zusammensetzung, die aus einem Gemisch wasserlöslicher, aminofunktioneller und im wesentlichen alkoxygruppenfreier Siliciumverbindungen, Wasser, gegebenenfalls einem Gehalt an Alkohol und gegebenenfalls einem Gehalt an Säure besteht, das dadurch gekennzeichnet ist, daß man mindestens ein Aminosilan der allgemeinen Formel III

NH₂[(CH₂)₂NH]ₓ(CH₂)₃Si(OR)₃ (III),

worin x gleich 0, 1 oder 2 ist und R eine lineare oder verzweigte Alkyl-Gruppe mit 1 bis 4 C-Atomen darstellt,
und/oder dessen Ankondensationsprodukte
und mindestens ein Aminosilan der allgemeinen Formel IV

(RO)₃Si(CH₂)₃[NH(CH₂)₂]_{y}NH[(CH₂)₂NH]_{z}(CH₂)₃Si(OR)₃ (IV),

worin y und z gleich 0, 1 oder 2 und gleich oder verschieden sind und R eine lineare oder verzweigte Alkyl-Gruppe mit 1 bis 4 C-Atomen darstellt,
und/oder dessen Ankondensationsprodukte
mischt, Wasser und gegebenenfalls Säure zugibt, hydrolysiert und den Hydrolysealkohol im wesentlichen entfernt.

Es wurde gefunden, daß bei einem Gewichtsverhältnis der Edukte der Formeln III und IV mit III/IV < 1 Gelbildung oder eine sehr starke Trübung eintreten und dadurch einer besonders vorteilhaften Applikation entgegenwirken kann.

Geeigneterweise setzt man beim erfindungsgemäßen Verfahren Edukte der allgemeinen Formel III und der allgemeinen Formel IV in einem Gewichtsverhältnis III/IV ≥ 1, vorzugsweise mit einem Gewichtsverhältnis von III : IV = 1 bis 100 : 1, besonders vorzugsweise mit einem Gewichtsverhältnis von III : IV = 1,5 bis 30 : 1 und ganz besonders vorzugsweise mit einem Gewichtsverhältnis von III : IV = 1,5 bis 4,5 : 1 ein.

Somit sind nun auch wasserbasierende - bis auf Restmengen - alkoholfreie Lösungen zugänglich, die Bis(trihydroxysilylalkyl)amine bzw. entsprechende oligomere oder polymere Siloxane der allgemeinen Formel II enthalten.

Beim erfindungsgemäßen Verfahren setzt man als Aminosilane der allgemeinen Formel III bevorzugt

H₂N(CH₂)₃Si(OCH₃)₃ (AMMO),

H₂N(CH₂)₃Si(OC₂H₅)₃ (AMEO),

H₂N(CH₂)₂NH(CH₂)₃Si(OCH₃)₃ (DAMO),

H₂N(CH₂)₂NH(CH₂)₂NH(CH₂)₃Si(OCH₃)₃ (TRIAMO),

und als Verbindungen gemäß Formel IV vorzugsweise

(H₃CO)₃Si(CH₂)₃NH(CH₂)₃Si(OCH₃)₃ (Bis-AMMO),

(H₅C₂O)₃Si(CH₂)₃NH(CH₂)₃Si(OC₂H₅)₃ (Bis-AMEO),

(H₃CO)₃Si(CH₂)₃NH(CH₂)₂NH(CH₂)₂NH(CH₂)₃Si(OCH₃)₃ (Bis-DAMO),

(H₃CO)₃Si(CH₂)₃NH(CH₂)₂NH(CH₂)₂NH(CH₂)₂NH(CH₂)₂NH(CH₂)₃Si(OCH₃)₃ (Bis-TRIAMO)

ein. Man kann aber auch entsprechende Verbindungen mit anderen Alkoxygruppen einsetzen, bevorzugt sind als hydrolysierbare Gruppen, Methoxy- sowie Ethoxygruppen. Ferner kann man Gemische mit jeweils mehr als einer der Verbindungen der allgemeinen Formeln III und IV einsetzen.

Die Aminosilane der allgemeinen Formel III können auch cyclisiert vorliegen, vgl. Formel V, und als solche beim erfindungsgemäßen Verfahren eingesetzt werden. Verbindungen der allgemeinen Formel V werden im vorliegenden Fall auch denen der allgemeinen Formel III zugerechnet: 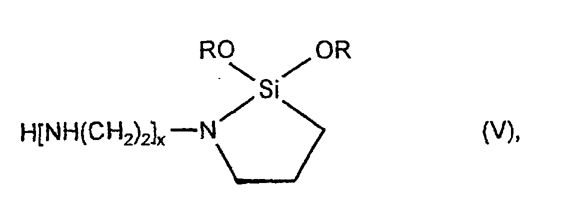 mit
R = Methyl, Ethyl, Propyl oder Butyl und
x = 0, 1 oder 2.

Es ist bekannt, daß ein solcher Cyclus bei Hydrolyse oder Alkoholyse geöffnet und das entsprechende Aminoalkylalkoxysilan bzw. -silanol erhalten wird.

Ebenso können Verbindungen der allgemeinen Formel IV in cyclischer bzw. bicyclischer Form vorliegen und als solche beim erfindungsgemäßen Verfahren eingesetzt werden.

Im allgemeinen führt man das erfindungsgemäße Verfahren derart aus, daß man Aminosilane der allgemeinen Formeln III und IV mischt, gemeinsam hydrolysiert und die entstandenen Hydrolysealkohole destillativ entfernt Das Mischen der Alkoxysilane kann in einem Temperaturbereich zwischen Festund Siedepunkt der eingesetzten Silane erfolgen. In der Regel setzt man zur Durchführung der Hydrolyse dem Silangemisch Wasser im Überschuß zu.

Geeigneterweise stellt man die Konzentration der Silane in der wäßrigen Lösung auf einen Wert <60 Gew.-%, bevorzugt < 50 Gew.-%, besonders bevorzugt auf 0,01 bis 40 Gew.-% und ganz besonders bevorzugt auf 0,5 bis 40 Gew.-% ein. Eine Abweichung von diesen Parametern kann zur Gelbildung oder einer starken Trübung führen. Bei der Hydrolyse der Alkoxysilane wird Alkohol gebildet.

Im allgemeinen kann man die Hydrolyse bei einer Temperatur im Bereich von 0 bis 100°C durchführen. Vorzugsweise führt man die Hydrolyse bei einer Temperatur < 100 °C, besonders vorzugsweise bei < 90 °C und ganz besonders vorzugsweise bei < 60 °C durch. In der Regel sorgt man dabei für eine gute Durchmischung, beispielsweise durch Rühren.

Geeigneterweise führt man beim erfindungsgemäßen Verfahren die Hydrolyse bei einem pH-Wert im Bereich von 4 bis 12 durch.

Ferner kann man dem Silangemisch oder System Silangemisch/Wasser oder dem bereits hydrolysierten System eine Säure oder Base zur Einstellung des pH-Werts zusetzen.

Vorzugsweise gibt man beim erfindungsgemäßen Verfahren mindestens eine Brönstedt-Säure zu. Sofern erforderlich, kann man auch eine Brönstedt-Base zusetzen, beispielsweise Kalilauge, Natronlauge sowie Ammoniak oder Amine, um nur einige zu nennen.

Als Säure besonders bevorzugt sind hierbei Chlorwasserstoff, Schwefelsäure, Salpetersäure, Perchlorsäure, Ameisensäure, Essigsäure und/oder Propionsäure.

Ferner senkt man beim erfindungsgemäßen Verfahren die Konzentration an Hydrolysealkohol durch Destillation, wobei man die Destillation vorzugsweise bei einer Temperatur < 90 °C, besonders vorzugsweise bei < 60 °C, sowie geeigneterweise unter vermindertem Druck durchführt.

Die Destillation kann vorteilhaft über eine Destillationskolonne vorgenommen und solange fortgeführt werden, bis am Kopf der Kolonne kein Alkohol mehr feststellbar ist, wobei im Sumpf das gewünschte Produkt anfälit und gegebenenfalls weiter aufgearbeitet werden kann. Falls Trübstoffe auftreten sollten, können diese mittels Filtration, Sedimentation, Zentrifugieren oder ähnlichen Standardverfahren aus dem Produkt entfernt werden.

Die Applikation der erfindungsgemäßen Zusammensetzung kann aus konzentrierter Lösung oder einer mit Wasser verdünnten Lösung erfolgen. Bei Verdünnen mit Wasser kann die Lagerstabilität der so verdünnten Zusammensetzung durch Zugabe von Säure verbessert werden. Geeigneterweise stellt man den pH-Wert der verdünnten Zusammensetzung auf einen Wert < 9 ein.

Die erfindungsgemäß gewonnenen Produkte haben insbesondere den Vorteil, daß sie wasserlöslich sind, sich spontan in jedem Verhältnis mit Wasser mischen lassen, einen hohen Gehalt an Bis(trihydroxysilylalkyl)amin sowie deren abgeleitete Siloxane enthalten und im wesentlichen alkoholfrei sind.

Erfindungsgemäße Zusammensetzungen finden ferner in hervorragender Weise Verwendung als wasserlösliche Haftvermittler, als Bestandteil in Beschichtungssystemen sowie in Korrosionsschutzmitteln, insbesondere bei der Beschichtung von Metall, für die biozide Ausrüstung von Oberflächen, für die Behandlung von Holz, für elektrophotographische Toner, als Bestandteil in Aminosiliconflüssigkeiten, als Bestandteil in Epoxidharzen, Phenolharzen, ungesättigten Polyesterharzen (UP-Harzen), Acrylharzen, als Bestandteil in organisch modifizierten Gläsern, für pharmazeutische und kosmetische Produkte, für die Modifizierung von Glas- und Mineraloberflächen sowie Glasund Mineralfaseroberflächen, einschließlich Glasperlen, Glasgewebe, Bauglasgewebe, um nur einige Beispiele zu nennen, für die Abwasserbehandlung, für die Pigmentbehandlung, als Bestandteil bei der Herstellung von Katalysatoren, als Flockungsmittel, als Bestandteil in Farben und Lacken, bei der Herstellung von Kunststeinen, zur Festigkeitssteigerung von Flachglas, Hohlglas und Verbundglas sowie als Haftvermittler für UV-vernetzende Polymere, insbesondere Acrylverbindungen auf Glas und anderen Substraten.

Die vorliegende Erfindung wird durch die folgenden Beispiele näher erläutert.

### Beispiel 1

### Herstellung einer alkoholfreien Mischung aus 80 % AMEO und 20 % "Bis-cyclo-AMEO + Bis-AMEO" (nachfolgend Hochsieder genannt) als 40%ige Lösung in Wasser

### Apparatur:

### 4-I-Rührreaktor mit Destilliervorrichtung, Innenthermometer, Dosiervorrichtung, Brückendestillation, Vakuumpumpe und Druckmeßgerät

120g Hochsieder werden mit 480g AMEO gemischt 1 250,0 g Wasser werden im Rührreaktor vorgelegt. Das Aminosilan-Gemisch wird innerhalb von 30 bis 40 Minuten über die Dosiervorrichtung zugegeben. Dabei steigt die Temperatur von Raumtemperatur auf ca. 50 °C an. Der Ansatz wird 3 Stunden bei 50°C gerührt. Danach werden ca. 450g Ethanol/Wasser-Gemisch abdestilliert (T: 39 bis 41 °C, p: 130 bis 100 mbar, ca. 70 Gew.-% Ethanol, ca. 30 Gew.-% Wasser). Das Endprodukt wird am Ende mit Wasser auf ein Gewicht von 1 500 g eingestellt (40 Gew.-% "Silane" in Wasser).

Die Trübung des Produkts kann über eine gewöhnliche Filtemutsche verbessert werden. Der Filterrückstand beträgt weniger als 0,2 Gew.-% der Gesamtproduktmenge. Nach Filtration beträgt die Trübung 3 bis 4 TE/F (DIN/EN 27 027; TE/F = Trübungseinheiten/Formazin).

Das Endprodukt ist über mehr als 12 Monate lagerstabil.

### Beispiel 2

### Herstellung einer alkoholfreien Mischung aus 80 % AMEO und 20 % "Bis-cyclo-AMEO + Bis-AMEO" (nachfolgend Hochsieder genannt) als 50%ige Lösung in Wasser

### Apparatur:

### 4-I-Rührreaktor mit Destilliervorrichtung, Innenthermometer, Dosiervorrichtung, Brückendestillation, Vakuumpumpe und Druckmeßgerät

120 g Hochsieder werden mit 480 g AMEO gemischt. 1 050 g Wasser werden im Rührreaktor vorgelegt. Das Aminosilan-Gemisch wird innerhalb von 30 bis 40 Minuten über die Dosiervorrichtung zugegeben. Der Ansatz wird 3 Stunden bei 50 °C gerührt. Danach werden ca. 450 g Ethanol/Wasser-Gemisch abdestilliert (T: 39 bis 41 °C, p: 130 bis 100 mbar, ca. 70 Gew.-% Ethanol, ca. 30 Gew.-% Wasser). Das Endprodukt wird am Ende mit Wasser auf ein Gewicht von 1 200 g eingestellt (50 Gew.-% "Silane" in Wasser).

Die Trübung des Produkts kann über eine gewöhnliche Filtemutsche verbessert werden. Der Filterrückstand beträgt weniger als 0,5 Gew.-% der Gesamtproduktmenge. Nach Filtration beträgt die Trübung < 10 TE/F (DIN/EN 27 027).

### Beispiel 3

### Herstellung einer alkoholfreien Mischung aus 60 % AMEO und 40 % "Bis-cyclo-AMEO + Bis-AMEO" (nachfolgend Hochsieder genannt) als 10%ige Lösung in Wasser

### Apparatur:

### 4-I-Rührreaktor mit Destilliervorrichtung, Innenthermometer, Dosiervorrichtung, Brückendestillation, Vakuumpumpe und Druckmeßgerät

120 g Hochsieder werden mit 180 g AMEO gemischt. 2 000 g Wasser werden im Rührreaktor vorgelegt. Das Aminosilan-Gemisch wird innerhalb von 30 bis 40 Minuten über die Dosiervorrichtung zugegeben und anschließend mit Ameisensäure auf einen pH-Wert von 6 eingestellt. Dabei steigt die Temperatur von Raumtemperatur auf ca. 50 °C an. Der Ansatz wird 3 Stunden bei 50°C gerührt. Danach werden ca. 500 g Ethanol/Wasser-Gemisch abdestilliert (T: 39 bis 41 °C, p: 130 bis 100 mbar). Das Endprodukt wird am Ende mit Wasser auf ein Gewicht von 3 000 g eingestellt (10 Gew.-% "Silane" in Wasser).

Die Trübung des Produkts kann über eine gewöhnliche Filternutsche verbessert werden. Der Filterrückstand beträgt weniger als 0,5 Gew.-% der Gesamtproduktmenge. Nach Filtration beträgt die Trübung < 10 TE/F (DIN/EN 27 027).

### Beispiel 4

### Herstellung einer alkoholfreien Mischung aus 83 % DAMO und 17 % "Bis-cyclo-DAMO + Bis-DAMO" (nachfolgend Hochsieder genannt) als 40%ige Lösung in Wasser

### Apparatur:

### 4-I-Rührreaktor mit Destilliervorrichtung, Innenthermometer, Dosiervorrichtung, Brückendestillation, Vakuumpumpe und Druckmeßgerät

102 g Hochsieder werden mit 498 g DAMO gemischt. 1 090 g Wasser werden im Rührreaktor vorgelegt. Das Aminosilan-Gemisch wird innerhalb von 30 bis 40 Minuten über die Dosiervorrichtung zugegeben und anschließend mit Ameisensäure (260 g) auf einen pH-Wert von 6 eingestellt. Dabei steigt die Temperatur von Raumtemperatur auf ca. 50 °C an. Der Ansatz wird 3 Stunden bei 50°C gerührt. Danach werden ca. 450 g Ethanol/Wasser-Gemisch abdestilliert (T: 39 bis 41 °C, p: 130 bis 100 mbar). Das Endprodukt wird am Ende mit Wasser auf ein Gewicht von 1 500 g eingestellt (40 Gew.-% "Silane" in Wasser).

Die Trübung des Produkts kann über eine gewöhnliche Filternutsche verbessert werden. Der Filterrückstand beträgt weniger als 0,5 Gew.-% der Gesamtproduktmenge. Nach Filtration beträgt die Trübung < 10 TE/F (DIN/EN 27 027).

### Beispiel 5

### Herstellung einer alkoholfreien Mischung aus 80 % TRIAMO und 20 % "Bis-cyclo-TRIAMO + Bis-TRIAMO" (nachfolgend Hochsieder genannt) als 40%ige Lösung in Wasser

### Apparatur:

### 4-I-Rührreaktor mit Destilliervorrichtung, Innenthermometer, Dosiervorrichtung, Brückendestillation, Vakuumpumpe und Druckmeßgerät

120g Hochsieder werden mit 480g TRIAMO gemischt. 1 110g Wasser werden im Rührreaktor vorgelegt. Das Aminosilan-Gemisch wird innerhalb von 30 bis 40 Minuten über die Dosiervorrichtung zugegeben und anschließend mit Ameisensäure (240 g) auf einen pH-Wert von 6 eingestellt. Dabei steigt die Temperatur von Raumtemperatur auf ca. 50°C an. Der Ansatz wird 3 Stunden bei 50°C gerührt. Danach werden ca. 450 g Ethanol/Wasser-Gemisch abdestilliert (T: 39 bis 41 °C, p: 130 bis 100 mbar). Das Endprodukt wird am Ende mit Wasser auf ein Gewicht von 1 500 g eingestellt (40 Gew.-% "Silane" in Wasser).

Die Trübung des Produkts kann über eine gewöhnliche Filternutsche verbessert werden. Die Filterrückstand beträgt weniger als 0,5 Gew.-% der Gesamtproduktmenge. Nach Filtration beträgt die Trübung < 10 TE/F (DIN/EN 27 027).

## Patentansprüche

1. Zusammensetzung, die aus einem Gemisch wasserlöslicher, aminofunktioneller und im wesentlichen alkoxygruppenfreier Siliciumverbindungen, Wasser, gegebenenfalls einem Gehalt an Alkohol und gegebenenfalls einem Gehalt an Säure besteht, wobei die Zusammensetzung Siliciumverbindungen der allgemeinen Formel I
NH₂[(CH₂)₂NH]ₓ(CH₂)₃SiO_{1,5} (I),
worin x gleich 0, 1 oder 2 ist,
und der allgemeinen Formel II
(SiO_{1,5})(CH₂)₃[NH(CH₂)₂]_{y}NH[(CH₂)₂NH]_{z}(CH₂)₃SiO_{1,5} (II),
worin y und z gleich 0, 1 oder 2 und gleich oder verschieden sind, enthält.

2. Zusammensetzung nach Anspruch 1
**gekennzeichnet durch**
einen Gehalt an Alkohol von weniger als 5 Gew.-%.

3. Zusammensetzung nach Anspruch 1 oder 2
**gekennzeichnet durch**
einen pH-Wert von weniger als 11.

4. Zusammensetzung nach einem der Ansprüche 1 bis 3
**gekennzeichnet durch**
einen Gehalt an Siliciumverbindungen von weniger als 60 Gew.-%.

5. Zusammensetzung nach einem der Ansprüche 1 bis 4,
**dadurch gekennzeichnet,**
**daß** das Gewichtsverhältnis der Siliciumverbindungen der allgemeinen Formel I und der allgemeinen Formel II I/II ≥ 1 ist.

6. Zusammensetzung nach einem der Ansprüche 1 bis 5
**gekennzeichnet durch**
Siliciumverbindungen gemäß den Formeln I und II einschließlich der hierzu jeweils im Gleichgewicht befindlichen Silanole und Siloxane.

7. Verfahren zur Herstellung einer Zusammensetzung, die aus einem Gemisch wasserlöslicher, aminofunktioneller und im wesentlichen alkoxygruppenfreier Siliciumverbindungen, Wasser, gegebenenfalls einem Gehalt an Alkohol und gegebenenfalls einem Gehalt an Säure besteht,
**dadurch gekennzeichnet,**
**daß** man mindestens ein Aminosilan der allgemeinen Formel III
NH₂[(CH₂)₂NH]ₓ(CH₂)₃Si(OR)₃ (III),
worin x gleich 0, 1 oder 2 ist und R eine lineare oder verzweigte Alkyl-Gruppe mit 1 bis 4 C-Atomen darstellt,
und/oder dessen Ankondensationsprodukte
und mindestens ein Aminosilan der allgemeinen Formel IV
(RO)₃Si(CH₂)₃[NH(CH₂)₂]_{y}NH[(CH₂)₂NH]_{z}(CH₂)₃Si(OR)₃ (IV),
worin y und z gleich 0, 1 oder 2 und gleich oder verschieden sind und R eine lineare oder verzweigte Alkyl-Gruppe mit 1 bis 4 C-Atomen darstellt,
und/oder dessen Ankondensationsprodukte
mischt, Wasser und gegebenenfalls Säure zugibt, hydrolysiert und den Hydrolysealkohol im wesentlichen entfernt.

8. Verfahren nach Anspruch 7,
**dadurch gekennzeichnet,**
**daß** man Aminosilane der allgemeinen Formel III und der allgemeinen Formel IV in einem Gewichtsverhältnis III/IV ≥ 1 einsetzt.

9. Verfahren nach Anspruch 7 oder 8,
**dadurch gekennzeichnet,**
**daß** man die Hydrolyse bei einer Temperatur < 100 °C durchführt.

10. Verfahren nach einem der Ansprüche 7 bis 9,
**dadurch gekennzeichnet,**
**daß** man die Hydrolyse bei einem pH-Wert von 4 bis 12 durchführt.

11. Verfahren nach einem der Ansprüche 7 bis 10,
**dadurch gekennzeichnet,**
**daß** man als Säure mindestens eine Brönstedt-Säure zugibt.

12. Verfahren nach einem der Ansprüche 7 bis 11,
**dadurch gekennzeichnet,**
**daß** man die Konzentration an Hydrolysealkohol durch Destillation senkt.

13. Verfahren nach einem der Ansprüche 7 bis 12,
**dadurch gekennzeichnet,**
**daß** man den pH-Wert der Zusammensetzung auf einen Wert < 11 einstellt.

14. Zusammensetzung erhältlich nach einem der Ansprüche 7 bis 13.

15. Verwendung einer Zusammensetzung nach den Ansprüche 1 bis 14 als wasserlöslicher Haftvermittler, als Bestandteil in Beschichtungssystemen sowie in Korrosionsschutzmittel, für die biozide Ausrüstung von Oberflächen, für die Behandlung von Holz, für elektrophotographische Toner, als Bestandteil in Aminosiliconflüssigkeiten, als Bestandteil in Epoxid-, Phenol-, UP- oder Acrylharzen, als Bestandteil in organisch modifizierten Gläsern, für die Herstellung pharmazeutischer und kosmetischer Produkte, für die Modifizierung von Glas- und Mineraloberflächen sowie Glas- und Mineralfaseroberflächen, für die Herstellung von Kunststeinen, für die Abwasserbehandlung, für die Oberflächenmodifizierung und Behandlung von Pigmenten, bei der Herstellung von Katalysatoren, als Flockungsmittel, als Bestandteil in Farben und Lacken, zur Steigerung der Festigkeit von Flach-, Hohl- und Verbundglas sowie als Haftvermittler für UV-vernetzende Polymere.

## Claims

1. A composition which comprises a mixture of water-soluble, amino-functional silicon compounds which are essentially free from alkoxy groups, water, optionally a content of alcohol and optionally a content of acid, the composition comprising silicon compounds of the general formula I
NH₂[(CH₂)₂NH]ₓ(CH₂)₃SiO_{1.5} (I)
in which x is 0, 1 or 2,
and of the general formula II
(SiO_{1.5})(CH₂)₃[NH(CH₂)₂]_{y}NH[(CH₂)₂NH]_{z}(CH₂)₃SiO_{1.5} (II)
in which y and z are 0, 1 or 2 and are identical or different.

2. A composition according to claim 1, **characterized by** a content of alcohol of less than 5% by weight.

3. A composition according to claim 1 or 2, **characterized by** a pH of less than 11.

4. A composition according to any one of claims 1 to 3, **characterized by** a content of silicon compounds of less than 60% by weight.

5. A composition according to any one of claims 1 to 4, **characterized in that** the weight ratio of the silicon compounds of the general formula I and of the general formula II I/II is ≥ 1.

6. A composition according to any one of claims 1 to 5, **characterized by** silicon compounds according to the formulae I and II, including the silanols and siloxanes in each case in equilibrium thereto.

7. A process for the preparation of a composition which comprises a mixture of water-soluble, amino-functional silicon compounds which are essentially free from alkoxy groups, water, optionally a content of alcohol and optionally a content of acid, **characterized in that** it comprises mixing at least one amino silane of the general formula III
NH₂[(CH₂)₂NH]ₓ(CH₂)₃Si(OR)₃ (III)
in which x is 0, 1 or 2 and R is a linear or branched alkyl group having 1 to 4 C atoms,
and/or condensation products thereof,
and at least one amino silane of the general formula IV
(RO)₃Si(CH₂)₃[NH(CH₂)₂]_{y}NH[(CH₂)₂NH]_{z}(CH₂)₃Si(OR)₃ (IV)
in which y and z are 0, 1 or 2 and are identical or different and R is a linear or branched alkyl group having 1 to 4 C atoms,
and/or condensation products thereof,
adding water and optionally acid, carrying out hydrolysis and essentially removing the hydrolysis alcohol.

8. A process according to claim 7, **characterized in that** amino silanes of the general formula III and of the general formula IV are employed in a weight ratio of III/IV of ≥ 1.

9. A process according to claim 7 or 8, **characterized in that** the hydrolysis is carried out at a temperature of < 100°C.

10. A process according to any one of claims 7 to 9, **characterized in that** the hydrolysis is carried out at a pH of 4 to 12.

11. A process according to any one of claims 7 to 10, **characterized in that** at least one Brönsted acid is added as the acid.

12. A process according to any one of claims 7 to 11, **characterized in that** the concentration of hydrolysis alcohol is lowered by distillation.

13. A process according to any one of claims 7 to 12, **characterized in that** the pH of the composition is brought to a value of < 11.

14. A composition obtainable according to any one of claims 7 to 13.

15. The use of a composition according to claims 1 to 14 as a water-soluble adhesion promoter, as a constituent in coating systems and in anticorrosion compositions, for the biocidal treatment of surfaces, for the treatment of wood, for electrophotographic toners, as a constituent in amino silicone fluids, as a constituent in epoxy, phenolic, UP or acrylic resins, as a constituent in organically modified glasses, for the preparation of pharmaceutical and cosmetic products, for the modification of surfaces of glass and minerals and glass and mineral fibre surfaces, for the preparation of artificial stone, for wastewater treatment, for the surface modification and treatment of pigments, in the preparation of catalysts, as a flocculating agent, as a constituent in paints and coatings, for increasing the strength of plate, hollow and laminated glass and as an adhesion promoter for UV-crosslinking polymers.

## Revendications

1. Composition qui consiste en un mélange de composés du silicium, fonctionnalisés par un groupe amino, pour l'essentiel dépourvus de groupe alkoxy, et solubles dans l'eau,, éventuellement avec une teneur en alcool et éventuellement une teneur en acide, et qui renferme des composés du silicium de formule générale I :
NH₂[CH₂)₂NH]ₓ(CH₂)₃SiO_{1.5} (I)
dans laquelle x est égale à 0, 1 ou 2, et de formule générale II :
(SiO_{1,5})(CH₂)₃ [NH(CH₂)₂]_{y} NH [(CH₂)₂NH]_{z} (CH₂)₃SiO_{1.5} (II)
dans laquelle y et z sont égaux à 0, 1 ou 2 et sont identiques ou différents.

2. Composition selon la revendication 1,
**caractérisée par**
une concentration en alcool Inférieure à 5 % en poids.

3. Composition selon la revendication 1 ou 2,
**caractérisée par**
une valeur de pH Inférieure à 11.

4. Composition selon l'une des revendications 1 à 3,
**caractérisée par**
une concentration en composés du silicium de moins de 60 % en poids.

5. Composition selon l'une des revendications 1 à 4,
**caractérisée en ce que**
le rapport en poids des composés du silicium de formule générale I et de formule générale II est I : II ≥ 1.

6. Composition selon l'une des revendications 1 à 5,
**caractérisée par**
des composés du silicium conformément aux formules I et II y compris les sllanols et les siloxanes qui se trouvent pour cela respectivement, en équilibre.

7. Procédé de préparation d'une composition qui consiste en un mélange à base de composés du silicium, fonctionnalisés par un amino. essentiellement dépourvus de groupes alkoxy, et solubles dans l'eau, éventuellement avec une teneur en alcool et éventuellement une teneur en acide,
**caractérisé en ce qu'**
on mélange au moins un aminosilane de formule générale III :
NH₂[(CH₂)₂NH]ₓ(CH₂)₃Si(OR)₃ (III)
dans laquelle x est égale à 0, 1 ou 2 et R représente un groupe alkyle linéaire ou ramifié ayant de 1 à 4 atomes de carbone, et/ou leurs produits de condensation et au moins un aminosilane de formule générale IV :
(RO)₃Si(CH₂)₃[NH(CH₂)₂]_{y}NH[(CH₂)₂NH]_{z}(CH₂)₃Si(OR)₃ (IV)
dans laquelle y et z sont égaux à 0, 1 ou 2 et sont identiques ou différents
et/ou leurs produits de condensation,
on ajoute de l'eau et éventuellement un acide, on hydrolyse et on élimine l'alcool d'hydrolyse pour l'essentiel.

8. Procédé selon la revendication 7,
**caractérisé en ce qu'**
on met en oeuvre les aminosilanes de formule générale III et de formule générale IV dans un rapport pondéral III/IV ≥ 1.

9. Procédé selon la revendication 7 ou la revendication 8,
**caractérisé en ce qu'**
on exécute l'hydrolyse à une température Inférieure à 100°C.

10. Procédé selon l'une des revendications 7 à 9,
**caractérisé en ce qu'**
on exécute l'hydrolyse à une valeur de pH allant de 4 à 12.

11. Procédé selon l'une des revendications 7 à 10,
**caractérisé en ce qu'**
on ajoute comme acide au moins un acide de Brönstedt.

12. Procédé selon l'une des revendications 7 à 11,
**caractérisé en ce qu'**
on abaisse la concentration en alcool d'hydrolyse par distillation.

13. Procédé selon l'une des revendications 7 à 12,
**caractérisé en ce qu'**
on ajuste la valeur de pH de la composition à une valeur < 11.

14. Composition accessible selon l'une des revendications 7 à 13.

15. Utilisation d'une composition selon les revendications 1 à 14 comme adjuvant d'adhésion soluble dans l'eau, comme constituant dans des systèmes de revêtement, ainsi que dans des agents protecteurs contre la corrosion, pour l'équipement blocide des surfaces, pour le traitement du bois, comme toner électro photographique, comme constituant dans des liquides d'aminosilicone, comme constituant dans des résines époxyde, phénol, UP ou acryliques, comme constituants dans des verres modifiés organiquement pour la production de produits pharmaceutiques et cosmétiques, pour la modification de surfaces de verre et de minéraux, ainsi que de la surface de fibres de verre et de minéraux, pour la production de pierres artificielles, pour le traitement des eaux usées, pour la modification des surfaces et le traitement de pigments pour la production de catalyseurs, comme agent de floculation, comme constituant dans des colorants et des laques, pour l'augmentation de la solidité du verre plat, du verre creux et composite, ainsi que comme adjuvant d'adhésion pour des polymères réticulant à la lumière UV.
